# EUROPEAN PATENT SPECIFICATION

(11) **EP 3 365 414 B1**
(45) Date of publication and mention of the grant of the patent: **05.01.2022**
(21) Application number: 16785478.5
(22) Date of filing: 24.10.2016
(51) Int. Cl.: C10J 3/72, C10J 3/86

(54) **ENERGY GENERATION SYSTEM**
ENERGIEGENERATIONSSYSTEM
SYSTÈME DE GÉNÉRATION D'ÉNERGIE

(30) Priority: 23.10.2015 GB 201518868
(43) Date of publication of application: 29.08.2018
(60) Divisional application: 21196730.2
(73) Proprietor: Clean Thermodynamic Energy Conversion Ltd, Newhaven, East Sussex BN9 0EX (GB)
(72) Inventor: BURNS, Michael, Alan, Newhaven East Sussex BN9 0EX (GB); BURNS, Paul, Andrew, Newhaven East Sussex BN9 0EX (GB)
(74) Representative: Boden, Keith McMurray
(86) International application number: PCT/EP2016/075563
(87) International publication number: WO 2017/068188

(56) References cited:
- US-A- 4 004 896
- US-A- 4 882 903
- US-A1- 2011 315 096

## Description

The present invention relates to a heated gas generation system for generating heated gas from waste product, such as municipal solid waste (MSW) and processed waste, for example, refuse-derived waste (RDF).

Various energy generation systems have been previously disclosed, such as the applicant's earlier WO-A-2013/114070 and WO-A-2013/114071. These systems do not, however, offer any means of utilizing waste product, especially municipal solid waste (MSW) and refuse-derived waste (RDF), and in particular the efficient use of generated synthetic gas or syngas.

US-A-2011/0315096 discloses a system and method for the efficient, clean and simultaneous conversion of multiple fuels, including waste-derived gas, and liquid and solid-phase fuels, using a closely-coupled combined thermal cycle system based on an air-fed gasifier and an internal combustion engine.

The present invention provides a heated gas generation system according to independent claim 1 and a use of such a system with waste product according to independent claim 12.

Further preferred embodiments of the invention are disclosed in the dependent claims.

Preferred embodiments of the present invention will now be described hereinbelow by way of example only with reference to the accompanying drawings, in which:

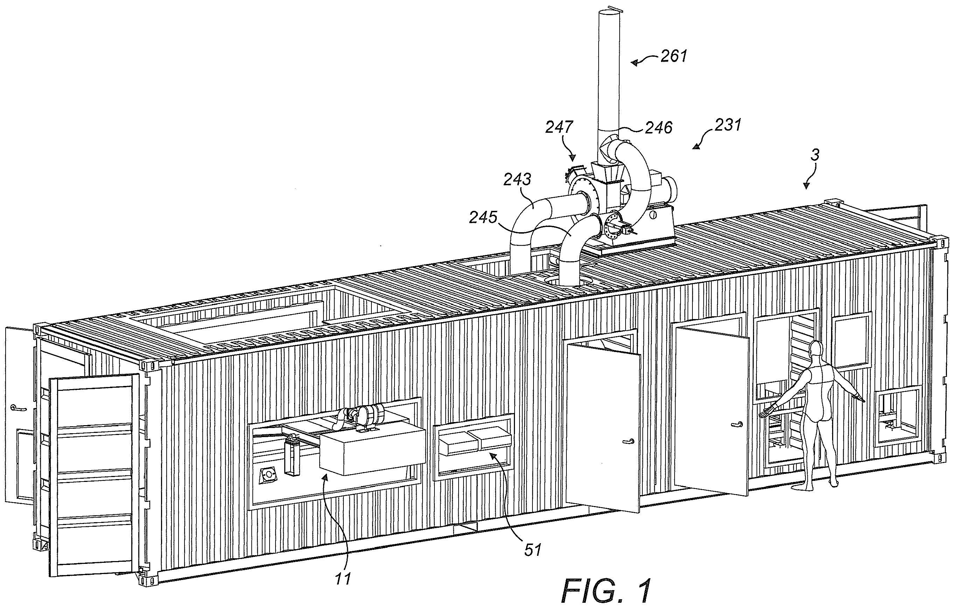

Figure 1 illustrates a perspective view of an energy generation system in accordance with a preferred embodiment of the present invention;

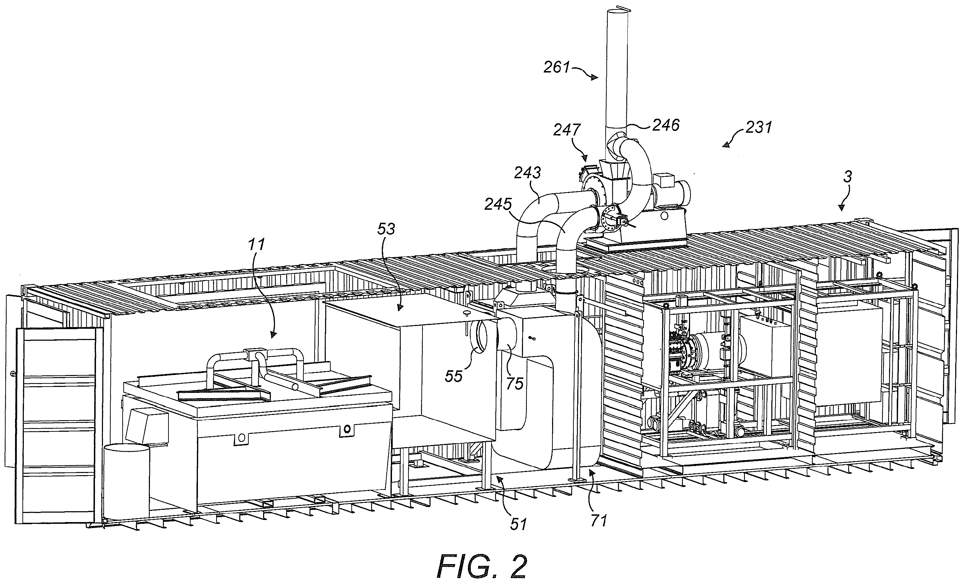

Figure 2 illustrates a cut-away perspective view of the system of Figure 1;

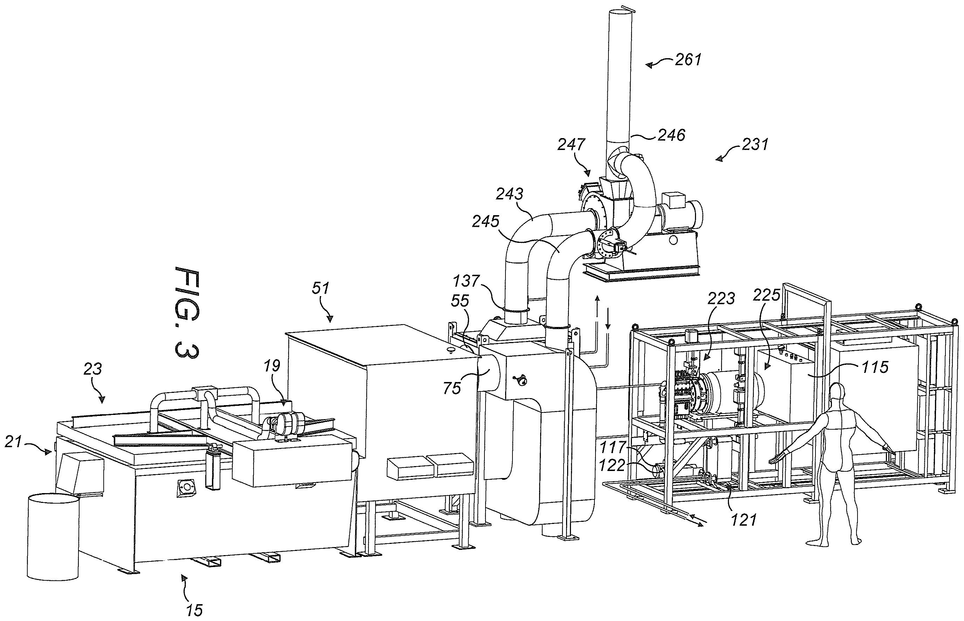

Figure 3 illustrates a perspective view of the system of Figure 1, with the enclosure removed;

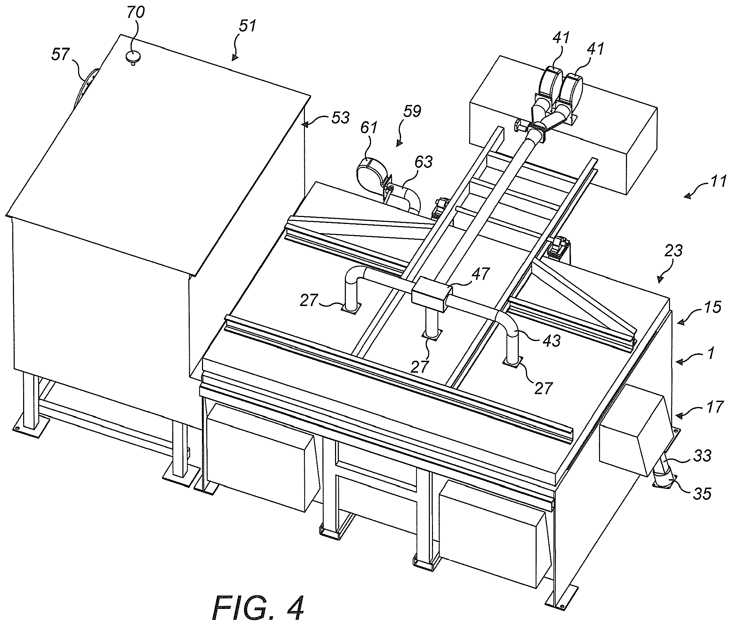

Figure 4 illustrates a perspective view of an assembly of the gasifier and the combustor of the system of Figure 1;

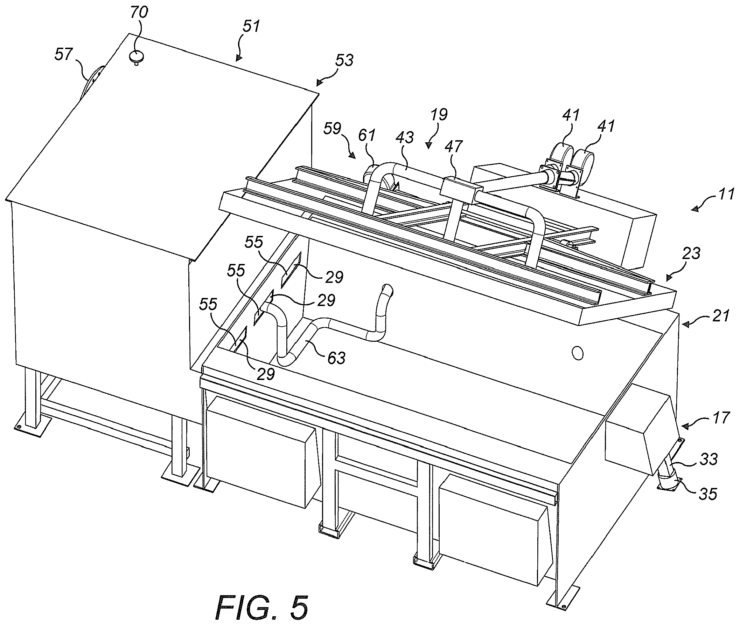

Figure 5 illustrates a perspective view of Figure 4, with the lid of the gasifier in the open position;

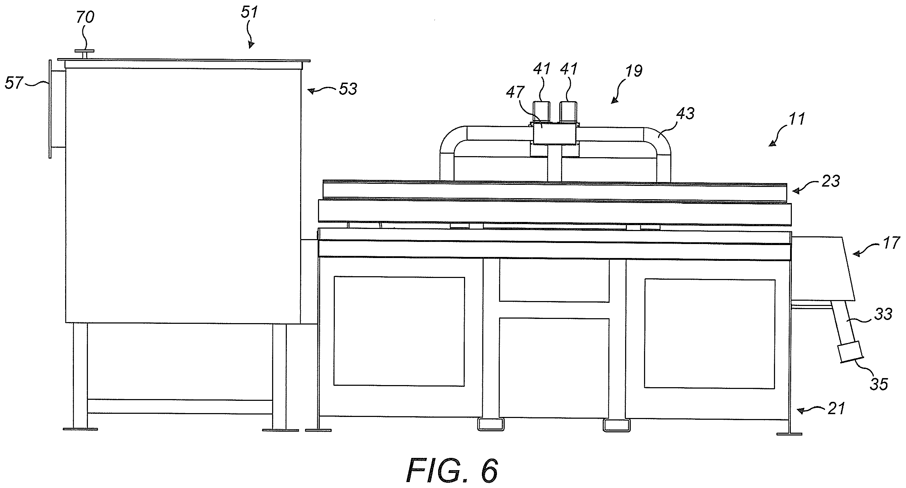

Figure 6 illustrates one side view of the assembly of Figure 4;

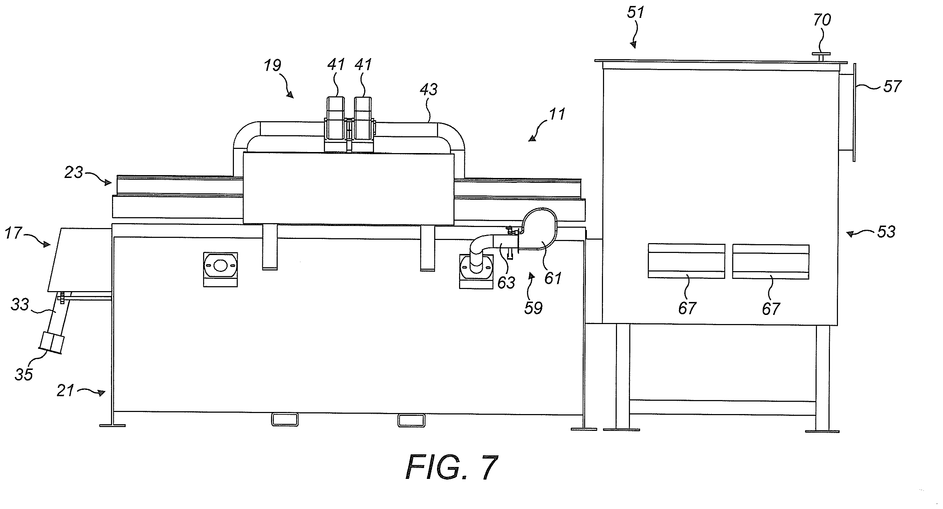

Figure 7 illustrates the other side view of the assembly of Figure 4;

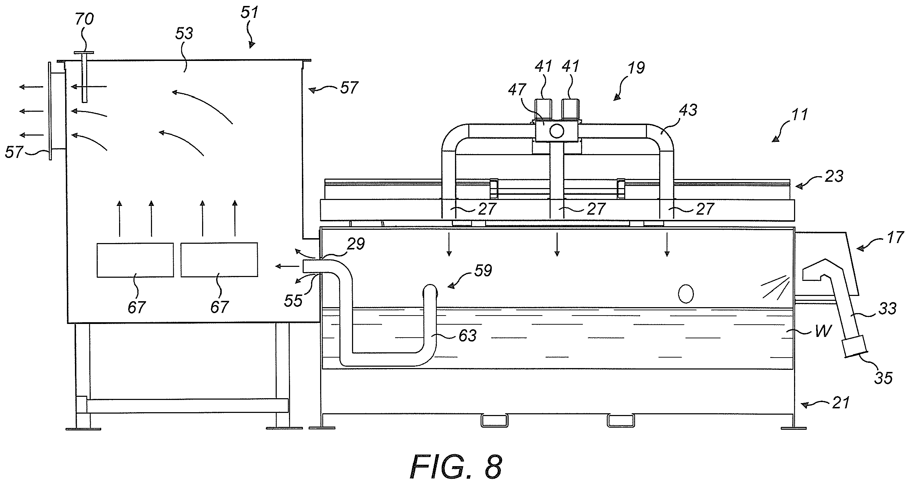

Figure 8 illustrates a longitudinal sectional view of the assembly of Figure 4;

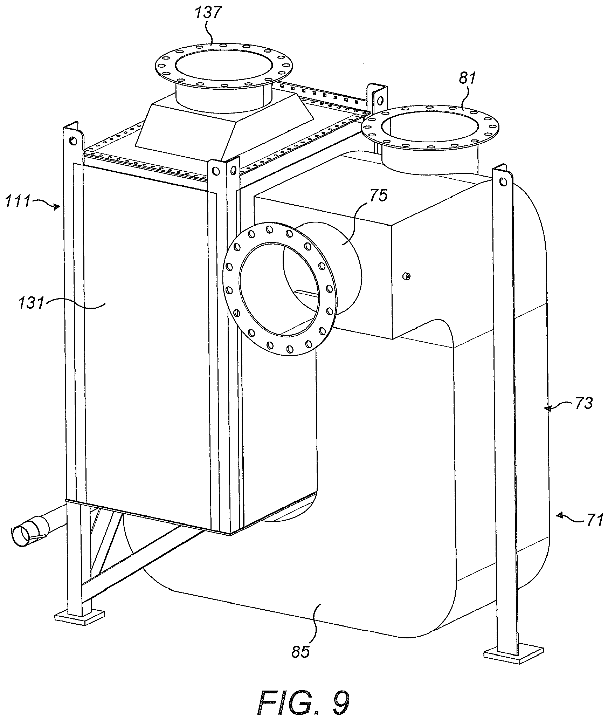

Figure 9 illustrates a perspective view from one side of an assembly of the gas tempering unit and the steam generator of the system of Figure 1;

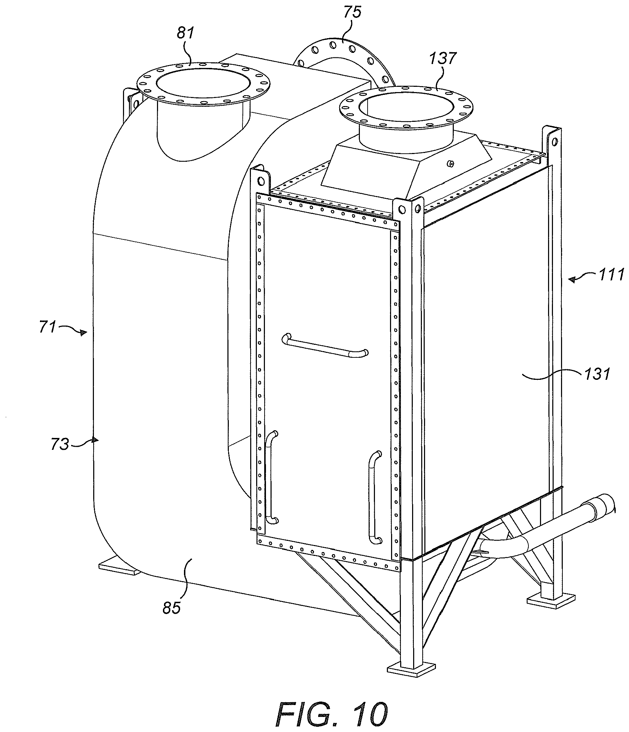

Figure 10 illustrates a perspective view from another side of the assembly of Figure 9;

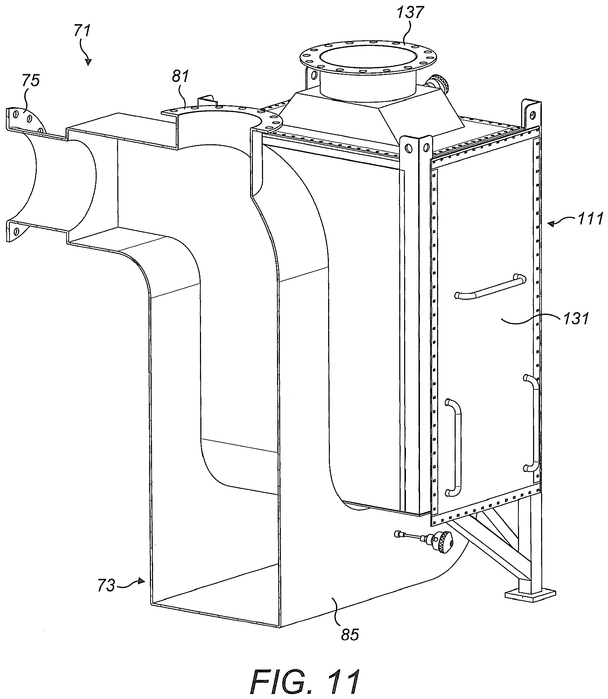

Figure 11 illustrates a part-sectional perspective view of the assembly of Figure 9;

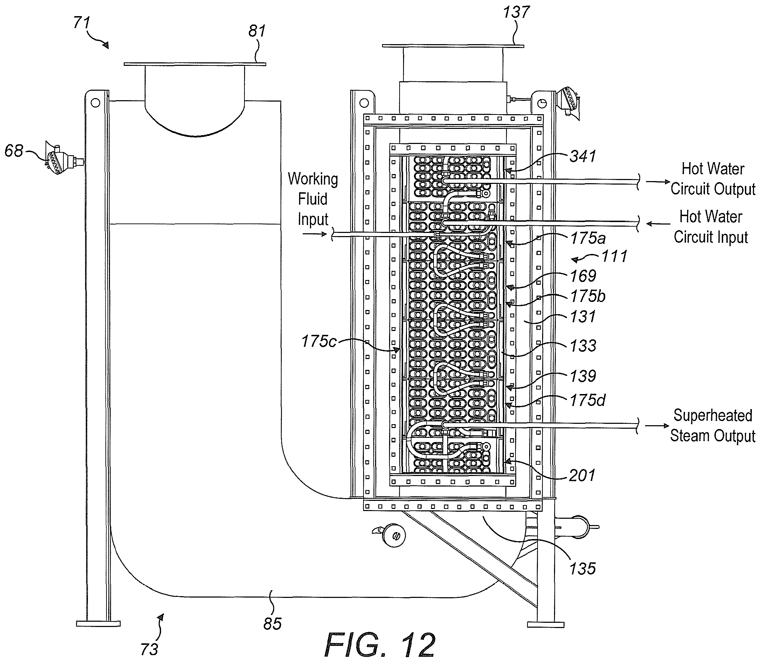

Figure 12 illustrates a cut-away side view of the assembly of Figure 9;

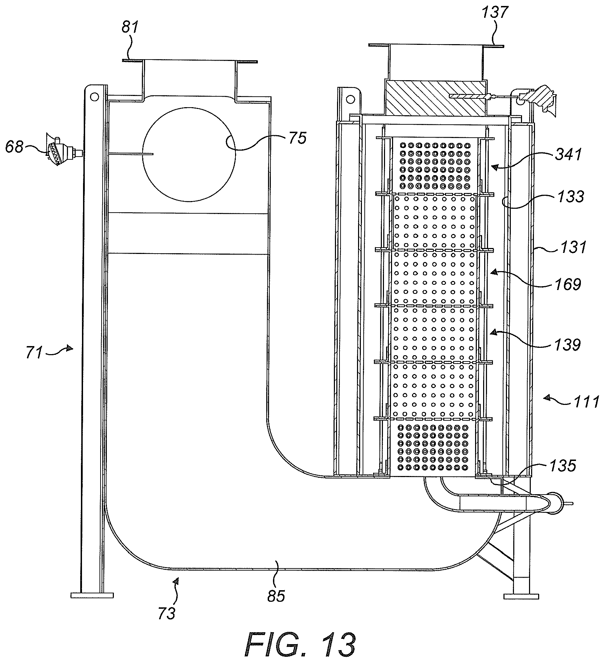

Figure 13 illustrates a vertical sectional view of the assembly of Figure 9;

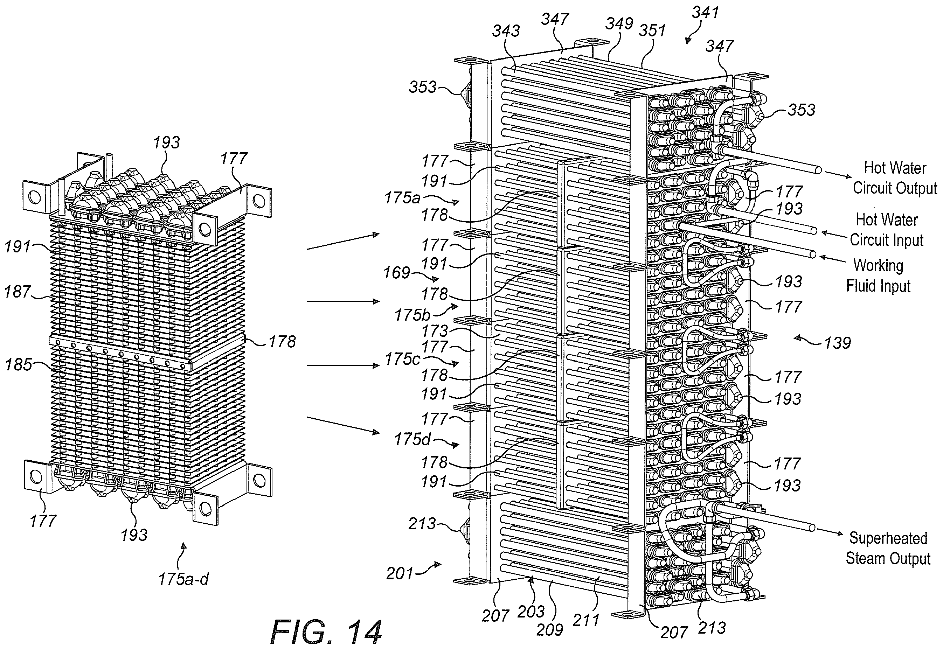

Figure 14 illustrates a fragmentary perspective view of the superheated steam generator of the assembly of Figure 9; and

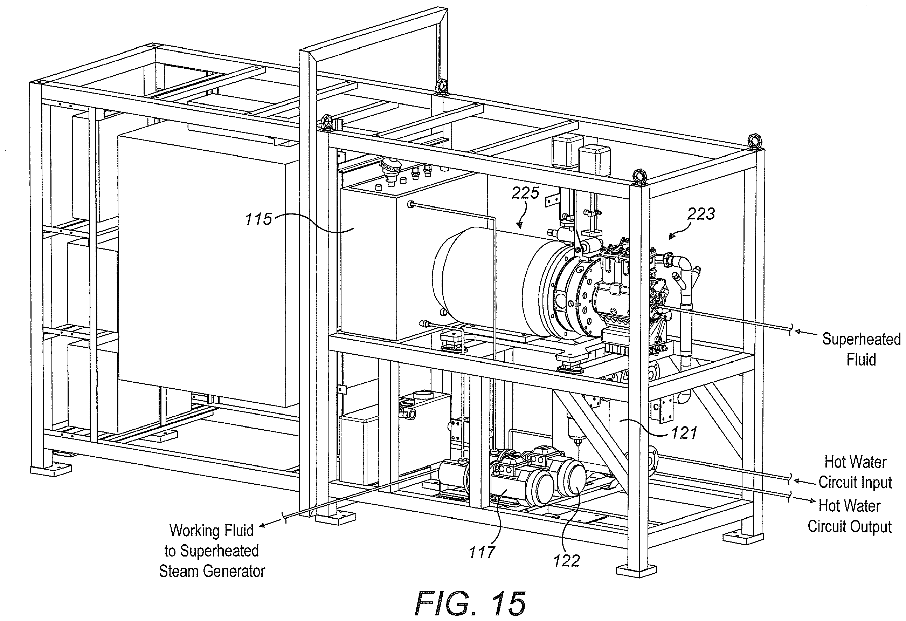

Figure 15 illustrates an enlarged perspective view of part of the superheated fluid generation unit of the system of Figure 1.

In this embodiment the energy generation system is housed in an enclosure 3, here an modified sea or shipping container.

The energy generation system comprises a gasifier 11 which receives waste product and is controlled, in a first phase, to generate syngas or synthetic gas from waste product for combustion downstream in a combustor 51, and subsequently, in a second phase, to incinerate the waste product following extraction of the syngas to provide a stream of hot gas.

In this embodiment the waste product is a solid waste.

In one embodiment the waste product can be a refuse-derived fuel (RDF), municipal solid waste (MSW), medical waste, bio-medical waste, agricultural waste, plant waste, animal waste, biomass, textile waste, food waste, pulp waste, tyre waste, plastic waste and manufacturing waste, or any combination thereof, for example, to achieve increased or predetermined calorific value.

In one embodiment the waste product can be combined with a material of higher calorific value, such as by mixing the material of higher calorific value with the waste product. In one embodiment the material of higher calorific value could be a waste product.

In one embodiment the waste product could be municipal solid waste (MSW) in combination with tyre waste, such as tyre particulate, for example, chips or shreds, and/or biomass.

In this embodiment the gasifier 11 comprises a primary chamber 15 which is loaded with waste product and in which the waste product is heated, a burner 17 for igniting waste product held the primary chamber 15, and an air delivery unit 19 for delivering air into the primary chamber 15.

In this embodiment the waste product is heated in batches, but in an alternative embodiment the waste product could be delivered continuously using a feed unit, such as from a hopper.

In this embodiment the primary chamber 15 comprises a receptacle 21 and a lid 23 which acts to enclose the receptacle 21.

In this embodiment the receptacle 21 and the lid 23 are lined with refractory material.

In this embodiment the primary chamber 15 includes at least one, here a plurality of inlets 27, which are fluidly connected to the air delivery unit 19 and provide for the delivery of air into the primary chamber 15.

In this embodiment the at least one inlet 27 is located in the lid 23.

In this embodiment the primary chamber 15 includes at least one, here a plurality of outlets 29, which provide for fluid communication to a secondary chamber 51, either of a stream of syngas or a stream of heated air, as will be described in more detail hereinbelow.

In one embodiment the burner 17 includes an air supply 33 and a control valve 35, here with a flap valve, which regulates a supply of air to the burner 17 and so enables control of the ignition.

With this arrangement, the burner 17 provides for ignition of the waste product, and control of the rate of ignition allows for control of the rate of burning of the waste product. As will be described in more detail hereinbelow, the present inventors have recognized that the rate of burning of the waste product can be carefully regulated to generate syngas without combustion of the same, whereas, if the initial burn or ignition is too great, this can cause acceleration of the rate of burning and an environment in which substantially all of the syngas is combusted. In this way, the waste product can be utilized more effectively by controlling the heating regime within the gasifier 11, in that, in a first phase, syngas can be extracted from the waste product for downstream combustion, and following extraction of the syngas, in a second phase, the waste product is burnt to provide a stream of hot gas.

In this embodiment the burner 17 is a diesel burner.

In this embodiment the air delivery unit 19 includes at least one fan 41, which is controllable to maintain a predetermined delivery of air into the primary chamber 15, and ducting 43 which fluidly connects the at least one fan 41 to the at least one inlet 27 of the primary chamber 15.

As noted hereinabove, the present inventors have recognized that, by controlling the rate of burning of the waste product, a prolonged generation of syngas can be achieved, but not such as to cause the combustion of that syngas, and this control is provided by regulating delivery of air to the primary chamber 15.

In this embodiment the air delivery unit 19 is controlled such as to cycle between first periods in which air is delivered to the primary chamber 15 and second periods in which substantially no air is delivered to the primary chamber 15. The present inventors have recognized that this mode of control prevents acceleration of the burn of the waste product.

In this embodiment the air delivery unit 19 includes first and second fans 41.

In this embodiment the air delivery unit 19 comprises a check valve 47, here a butterfly valve, which fluidly connects the at least one inlet 27 of the primary chamber 15 to the at least one fan 41 and prevents backflow upstream of the valve 47.

The energy generation system further comprises a combustor 51 in which syngas, as generated in the first phase of operation of the gasifier 11, is burnt to generate a stream of heated gas.

In this embodiment the combustor 51 comprises a combustion or secondary chamber 53 which includes at least one inlet 55 which is fluidly connected to the at least one outlet 29 of the primary chamber 15, through which a stream of gas is delivered, syngas in the first phase of operation and heated air in a second, subsequent phase of operation, into the secondary chamber 53, and an outlet 57 through which a stream of heated gas is delivered.

In this embodiment the combustor 51 further comprises an air delivery unit 59 which is controllable to regulate the amount of air as delivered to the secondary chamber 53, in dependence upon the required energy output from the system.

In this embodiment the air delivery unit 59 comprises at least one fan 61, here a single fan, and ducting 63 which fluidly connects the at least one fan 61 to the secondary chamber 53.

In this embodiment the ducting 63 extends at least in part through the primary chamber 15 of the gasifier 11, such that the air which is delivered into the secondary chamber 53 is pre-heated, here to a temperature of at least 350 °C.

In this embodiment the combustor 51 further comprises at least one, here a plurality of burners 67 which are controlled to pre-heat the secondary chamber 53 and, if required, to introduce additional heat, such that the secondary chamber 53 is maintained at or above a predetermined operating temperature, such that syngas, which is delivered from the gasifier 11 during the first phase of operation of the gasifier 11, is ignited.

In this embodiment the system includes a lambda sensor 68 for sensing the composition of the stream of hot gas which is delivered from the outlet 57 of the secondary chamber 53, the output of which is utilized to regulate the supply and mass of heated air from the air delivery unit 59, in order to ensure an efficient burn of the syngas.

In this embodiment the system includes a temperature sensor 70 for measuring the temperature of the stream of hot gas which is delivered from the secondary chamber 53, the output of which is utilized to regulate the temperature of the stream of hot gas which is delivered from the secondary chamber 53.

In this embodiment the secondary chamber 53 is maintained at a temperature of about 950 °C, optionally at least 850 °C, and optionally in the range of from about 850 °C to about 1000 °C, during the first phase of operation of the gasifier 11.

In this embodiment the secondary chamber 53 is configured such that the syngas has a residence time of greater than 2 s therein, optionally at least 3 s therein.

Operation of the gasifier 11 and the combustor 51 to produce a stream of heated gas will now be described.

The secondary chamber 53 is pre-heated to an operating temperature, here above 850 °C, using the burners 67, in order to ensure combustion of any syngas.

With the secondary chamber 53 pre-heated, the gasifier 11 is controlled, in a first mode during a first phase, to produce syngas, here by igniting the waste product using the burner 17 and regulating air supplied by the air delivery unit 19 to the primary chamber 15 of the gasifier 11, in this embodiment by cycling between first periods in which air is delivered at a first rate to the primary chamber 15 and second periods in which substantially no air is delivered or air is delivered at a second rate, lower than the first rate, to the primary chamber 15.

This produced syngas is delivered to the secondary chamber 53 and, together with heated air which is delivered to the secondary chamber 53 by the air delivery unit 59, the combustor 51 burns the syngas to generate a stream of hot gas which is delivered from the outlet 57 of the secondary chamber 53 to an air tempering unit 71, as will be described in more detail hereinbelow.

In this embodiment the composition and temperature of the stream of hot gas which is delivered from the secondary chamber 53 is measured using respective ones of the lambda sensor 68 and the temperature sensor 70, and these measurements are used to regulate the supply of air from the air delivery unit 59, in order to ensure an efficient burn of the syngas and maintain the temperature of the stream of hot gas which is delivered from the secondary chamber 53 at a desired temperature or within a desired temperature range, here a temperature of about 900 °C to about 950 °C.

This process continues for so long as syngas is being produced by the gasifier 11.

When substantially all of the syngas has been extracted from the waste product, the gasifier 11 is controlled, in a second mode during a second phase, to increase the rate of burning of the waste product by introducing a greater volume of air into the primary chamber 15, in this embodiment at a third rate, which is greater than the second rate and can be greater than the first rate, using the air delivery unit 19, and maintain a temperature in the primary chamber 15 of at least 1000 °C, optionally at least 1100 °C, to provide a stream of heated air to the secondary chamber 53 at a temperature of at least 1000 °C, optionally at least 1100 °C.

With this increased temperature in the primary chamber 15, the air delivered by the air delivery unit 19 is heated in the primary chamber 15 and passes into the secondary chamber 53 at a temperature which requires no additional heat input, and, in this second mode of operation, the burners 67 of the combustor 51 ordinarily provide no heat input.

In this embodiment the temperature of the stream of hot gas which is delivered from the secondary chamber 53 is measured using the temperature sensor 70, and this measurement is used to regulate the supply of cooler air from the air delivery unit 59, in order to maintain the temperature of the stream of hot gas which is delivered from the secondary chamber 53 at a desired temperature or within a desired temperature range, here a temperature of from about 900 °C to about 950 °C.

This process continues for so long as stream of heated gas is produced by the gasifier 11.

The energy generation system further comprises a gas tempering unit 71 for tempering the stream of heated gas as delivered by the combustor 51.

In this embodiment the gas tempering unit 71 comprises a tempering chamber 73 which includes a first inlet 75 which is fluidly connected to the outlet 57 of the secondary chamber 53, a second inlet 81 which is fluidly connected to a gas re-circulation unit 231, and an outlet 85 which is fluidly connected to a superheated fluid generation unit 101, as will be described in more detail hereinbelow.

With this configuration, the stream of heated gas is tempered by controlling the rate at which the re-circulated gas, which is at a lower temperature than the stream of heated gas, is delivered into the tempering chamber 73 in relation to the stream of heated gas.

In this embodiment the gas tempering unit 71 tempers the stream of heated gas to a temperature of from about 425 °C to about 650 °C, optionally from about 550 °C to about 650 °C.

In this embodiment the tempering chamber 73 is formed as a dust collector, in this embodiment a cyclone dust collector, for extracting particulate dust from the exhaust gas flow.

The energy generation system further comprises a superheated fluid generation unit 101 which generates a superheated fluid, in this embodiment superheated steam, from a working fluid, in this embodiment pure, de-mineralised water, optionally containing chemical additives, including oxygen scavengers and corrosion inhibitors.

The superheated steam generation unit 101 comprises a superheated fluid generator 111 which receives a stream of heated gas from the gas tempering unit 71, and generates a superheated fluid, in this embodiment superheated steam.

The superheated steam generation unit 101 further comprises a buffer tank 115 for storing a supply of the working fluid, in this embodiment water, and a first pump 117 for delivering the working fluid from the buffer tank 115 to the superheated steam generator 111 at a required flow rate and/or pressure.

The superheated steam generation unit 101 further comprises a condenser 121 in this embodiment a plate-type heat exchanger, which receives used steam from at least one steam engine 223 and condenses the used steam to a saturated liquid, in this embodiment water, and a second pump 122 for delivering the water to the buffer tank 115.

In this embodiment the condenser 121 has an input fluidly connected to a cold water supply of a hot water circuit, and an output from which heated water is delivered, such as for heating, for example, domestic or process heating.

With this configuration, the superheated steam generator 111, the buffer tank 115, the condenser 121 and the at least one steam engine 223 define a circulatory loop through which the working fluid is circulated, in being converted from a saturated liquid, here water, to a superheated fluid, here superheated steam, and back to a saturated liquid.

The superheated steam generator 111 comprises a housing 131, which defines a gas flow path 133 and has an inlet 135 at one, upstream end thereof which is fluidly connected to the outlet 85 of the gas tempering unit 71 and into which a stream of heated gas is delivered, and an outlet 137 at the other, downstream end thereof through which the stream of heated gas exits, and a superheated steam generation assembly 139 which is disposed within the gas flow path 133 of the housing 131.

The superheated steam generation assembly 139 comprises a heat exchanger unit 169 which is operative to raise the temperature of the working fluid as received from the buffer tank 115, in this embodiment to a temperature of about 260 °C, thereby providing the working fluid as saturated steam.

The heat exchanger unit 169 comprises at least one heat exchanger circuit 173, which has an input fluidly connected to the buffer tank 115 and an output from which the working fluid, as saturated steam, is delivered.

The heat exchanger unit 169 comprises at least one, in this embodiment a plurality of heat exchanger modules 175a-d, which are fluidly connected, such that the heat exchanger modules 175a-d each provide part of the flow path of the at least one heat exchanger circuit 173.

In this embodiment the heat exchanger modules 175a-d define an *nxm* array, here a 1x4 array.

In this embodiment the heat exchanger modules 175a-d each comprise first and second outer support elements 177 which are disposed in spaced relation and define a width of the heat exchanger unit 169, and an intermediate support element 178, here central between the outer support elements 177.

In this embodiment the outer support elements 177 of the heat exchanger modules 175a-d are interconnected by sliding couplings, which allow relative movement of the heat exchanger modules 175a-d, thus accommodating relative expansion thereof.

In this embodiment the heat exchanger modules 175a-d each comprise heat exchanger pipework 185 which extends between the outer support elements 177 of the heat exchanger modules 175a-d, and a plurality of fins 187 which extend in spaced, parallel relation to the outer support elements 177 of the heat exchanger modules 175a-d. For purposes of illustration, only some of the fins 187 are illustrated in certain of the views.

In this embodiment the heat exchanger pipework 185 comprises a plurality of tube sections 191, which are disposed in spaced relation, a plurality of tube end couplings 193 which fluidly connect the open ends of adjacent tube sections 191.

In this embodiment the tube sections 191 are formed of seamless stainless steel tube, here having an external diameter of 12.7 mm and an about 1.6 mm (16 swg) wall thickness.

With this configuration, the tube sections 191 and the pipe end couplings 193 provide continuous flow paths which extend in alternate directions across a width of the heat exchanger unit 169, and thus the gas flow passage 133 of the housing 131.

In this embodiment the fins 187 each comprise a single, continuous sheet element, which includes a plurality of apertures through which extend respective ones of the tube sections 191 of the respective heat exchanger module 175.

In this embodiment the fins 187 are thermally connected to respective ones of the tube sections 191, here brazed.

The superheated steam generation assembly 139 further comprises a superheater unit 201 which is located at an upstream end thereof and upstream of the heat exchanger unit 169, and is operative further to raise the temperature of the received working fluid, in this embodiment saturated steam, to a temperature of from about 300 °C to about 420 °C, preferably at a temperature of about 380 °C, and with a pressure of up to 60 bar, thereby providing superheated fluid to the at least one steam engine 223.

The superheater unit 201 comprises at least one superheater circuit 203, which has an input fluidly connected to the output of the at least one heat exchanger circuit 173 and an output from which a superheated fluid, in this embodiment superheated steam, is delivered.

In this embodiment the superheater unit 201 comprises first and second outer support elements 207 which are disposed in spaced relation and define a width of the superheater unit 201, and superheater pipework 209 which extends between the outer support elements 207.

In this embodiment the superheater pipework 209 comprises a plurality of tube sections 211, which are disposed in spaced relation, a plurality of tube end couplings 213 which fluidly connect the open ends of adjacent tube sections 211.

In this embodiment the tube sections 211 are formed of seamless stainless steel tube, here having an external diameter of 19.05 mm and a wall thickness of 1.65 mm.

With this configuration, the tube sections 211 and the pipe end couplings 213 provide continuous flow paths which extend in alternate directions across a width of the superheater unit 201, and thus the gas flow passage 133 of the housing 131.

The steam generation unit 101 further comprises at least one steam engine 223, in this embodiment a steam expander, which receives the superheated steam from the superheated steam generator 111, and at least one power generator 225 which is driven by the at least one steam engine 223 to generate power, in this embodiment electricity, which can be supplied to the electrical grid.

The energy generation system further comprises a re-circulation unit 231 though which heated gas which is exhausted though the steam generator 111 is partially re-circulated into the gas tempering unit 71.

In this embodiment the re-circulation unit 231 comprises an inlet 243 which is fluidly connected to the outlet 137 of the superheated steam generator 111, a first outlet 245 which is fluidly connected to the gas tempering unit 71, a second outlet 246 which is fluid connected to atmosphere through a muffler 261, and a gas flow unit 247 which is fluidly connected between the inlet 243 and the first outlet 245 and is controllable to re-circulate a fraction of the exhaust gas to the gas tempering unit 71 for the purpose of tempering the stream of heated gas which is supplied from the combustor 51.

In this embodiment the fraction of exhaust gas which is re-circulated to the gas tempering unit 71 is determined to maintain a mass balance within the system.

In this embodiment the gas flow unit 247 comprises a re-circulation fan, and can further comprise at least one valve to regulate relative flows through the first and second outlets 245, 246.

In this embodiment re-circulation unit 231 further comprises a muffler 261 which is fluidly connected to the second outlet 246, through which that part of the exhaust gas which is not re-circulated is exhausted to atmosphere.

The energy generation system further comprises a water heater unit 341 which is operative to raise the temperature of a water supply, such as for heating, for example, domestic or process heating.

The water heater unit 341 comprises at least one heater circuit 343, which has an input fluidly connected to a cold water supply of a hot water circuit, and an output from which heated water is delivered. In one embodiment the hot water circuit of the water heater unit 341 can be utilized together with the hot water circuit from the condenser 121 to provide a single supply of hot water.

In this embodiment the water heater unit 341 comprises first and second outer support elements 347 which are disposed in spaced relation and define a width of the water heater unit 341, and heater pipework 349 which extends between the outer support elements 347.

In this embodiment the heater pipework 349 comprises a plurality of tube sections 351, which are disposed in spaced relation, and a plurality of tube end couplings 353 which fluidly connect the open ends of adjacent tube sections 351.

In this embodiment the tube sections 351 are formed of seamless stainless steel tube, here having an external diameter of 19.05 mm and a wall thickness of 1.65 mm.

With this configuration, the tube sections 351 and the pipe end couplings 353 provide continuous flow paths which extend in alternate directions across a width of the heater unit 341, and thus the gas flow passage 133 of the housing 131.

Finally, it will be understood that the present invention has been described in its preferred embodiments and can be modified in many different ways without departing from the scope of the invention as defined by the appended claims.

For example, in the described embodiment, the energy generation system has been described in relation to an application for power generation, but the present invention has other application, such as in processing stations where the superheated steam is utilized directly, for example, in pasteurizing food or waste products.

Also, the described embodiment includes a single steam engine 223 and the steam generation module 139 includes a single fluid circuit associated with the single steam engine 223, but could comprise a plurality of steam engines 223 and the superheated steam generation assembly 139 could include a corresponding plurality of fluid circuits.

## Claims

1. A heated gas generation system for generating heated gas from waste product, the system comprising:
a gasifier (11) which includes a primary chamber (15) for receiving waste product and including at least one air inlet (27) and at least one gas outlet (29), a burner (17) for igniting waste product held in the primary chamber (15), and an air delivery unit (19) for delivering air into the primary chamber (15) through the at least one air inlet (27) of the primary chamber (15); and
a combustor (51) which includes a secondary chamber (53) including at least one gas inlet (55) which is fluidly connected to the at least one gas outlet (29) of the primary chamber (15), at least one air inlet and at least one gas outlet (57), at least one burner (67) for preheating the secondary chamber (53), and an air delivery unit (59) for delivering air through the at least one air inlet of the combustor (51);
**characterized in that**:
the gasifier (11) is controlled, in a first mode of operation, by regulating delivery of air to the primary chamber (15) so as to heat the waste product to extract syngas or synthetic gas from the waste product and deliver a stream of syngas through the at least one gas outlet (29) of the gasifier (11), and subsequently, in a second mode of operation, following extraction of syngas from the waste product, by regulating delivery of air to the primary chamber (15) to be greater than delivery of air to the primary chamber (15) in the first mode of operation of the gasifier (11) so as to burn the waste product to provide a stream of heated gas and deliver the stream of heated gas through the at least one gas outlet (29) of the gasifier (11); and
the combustor (51) is controlled, in a first mode of operation, by regulating delivery of air to the secondary chamber (53) so as to maintain the secondary chamber (53) at a temperature of at least 850 °C and burn the stream of syngas which is delivered from the primary chamber (15) in the first mode of operation of the gasifier (11) to generate a stream of heated gas through the at least one gas outlet (57) of the combustor (51), and, in a second mode of operation, deliver the stream of heated gas which is delivered from the primary chamber (15) in the second mode of operation of the gasifier (11) through the at least one gas outlet (57) of the combustor (51).

2. The system of claim 1, wherein the burner (17) of the gasifier (11) includes an air supply (33) and a control valve (35) which regulates a supply of air to the burner (17) and so controls a rate of ignition of the waste product.

3. The system of claim 1 or 2, wherein the air delivery unit (19) of the gasifier (11) includes at least one fan (41) which is controlled to regulate delivery of air into the primary chamber (15), optionally the air delivery unit (19) of the gasifier (11) comprises a check valve (47) which fluidly connects the at least one air inlet (27) of the primary chamber (15) to the at least one fan (41) of the air delivery unit (19) of the gasifier (11), whereby the check valve (47) prevents backflow upstream of the check valve (47).

4. The system of any of claims 1 to 3, wherein the air delivery unit (19) of the gasifier (11) is controlled to cycle between first periods in which air is delivered to the primary chamber (15) at or above a first rate and second periods in which air is delivered to the primary chamber (15) at or below a second rate, optionally substantially no air is delivered to the primary chamber (15) in the second periods.

5. The system of any of claims 1 to 4, wherein the system is configured to heat the waste product in batches or continuously.

6. The system of any of claims 1 to 5, wherein the air delivery unit (59) of the combustor (51) includes a duct (63) which extends at least in part through or adjacent the primary chamber (15), such that the air which is delivered to the combustor (51) through the at least one air inlet thereof is pre-heated.

7. The system of claim 6, wherein the air which is delivered to the combustor (51) through the at least one air inlet thereof is pre-heated to a temperature of at least 350 °C.

8. The system of any of claims 1 to 7, wherein the air delivery unit (59) of the combustor (51) comprises at least one fan (61) which is controlled to regulate delivery of air through the at least one air inlet of the combustor (51).

9. The system of any of claims 1 to 8, wherein the combustor (51) is controlled to maintain the secondary chamber (53), during the first mode of operation of the gasifier (11), at a temperature of at least 900 °C or in the range of from about 850 °C to about 1000 °C.

10. The system of any of claims 1 to 9, wherein the secondary chamber (53) is configured such that the syngas has a residence time of greater than 2 s therein, optionally at least 3 s.

11. The system of any of claims 1 to 10, wherein the gasifier (11) is controlled, in the second mode of operation of the gasifier (11), to maintain the secondary chamber (53) at a temperature of at least 1000 °C, optionally at least 1100 °C, to provide a stream of heated air to the combustor (51) at a temperature of at least 1000 °C, optionally at least 1100 °C.

12. Use of the system of any of claims 1 to 11 with waste product selected from a solid waste refuse-derived fuel (RDF), a municipal solid waste (MSW), medical waste, bio-medical waste, agricultural waste, plant waste, animal waste, biomass, textile waste, food waste, pulp waste, tyre waste, plastic waste, manufacturing waste, or any combination thereof.

13. The use of claim 12, wherein the waste product is combined with a material of higher calorific value.

## Patentansprüche

1. System zur Erzeugung von erhitztem Gas aus Abfallprodukten, worin das System umfasst:
einen Vergaser (11), der eine Primärkammer (15) zur Aufnahme der Abfallprodukte und mindestens einen Lufteinlass (27) und mindestens einen Gasauslass (29), einen Brenner (17) zum Zünden der in der Primärkammer (15) befindlichen Abfallprodukte und eine Luftzufuhreinheit (19) zum Zuführen von Luft in die Primärkammer (15) durch den mindestens einen Lufteinlass (27) der Primärkammer (15) umfasst; und
eine Brennkammer (51), die eine Sekundärkammer (53) mit mindestens einem Gaseinlass (55), der mit dem mindestens einen Gasauslass (29) der Primärkammer (15) fluidmäßig verbunden ist, mindestens einen Lufteinlass und
mindestens einen Gasauslass (57), mindestens einen Brenner (67) zum Vorheizen der Sekundärkammer (53) und eine Luftzufuhreinheit (59) zum Zuführen von Luft durch den mindestens einen Lufteinlass der Brennkammer (51) umfasst;
**dadurch gekennzeichnet, dass**:
der Vergaser (11) in einem ersten Betriebsmodus durch Regulierung der Luftzufuhr zur Primärkammer (15) gesteuert wird, die Abfallprodukte zu erhitzen, um Synthesegas oder synthetisches Gas aus den Abfallprodukten zu extrahieren und einen Strom von Synthesegas durch den mindestens einen Gasauslass (29) des Vergasers (11) zu liefern, und anschließend in einem zweiten Betriebsmodus, nach der Extraktion des Synthesegases aus den Abfallprodukten, durch Regulieren der Luftzufuhr zu der Primärkammer (15), so dass diese größer ist als die Luftzufuhr zu der Primärkammer (15) in dem ersten Betriebsmodus des Vergasers (11), die Abfallprodukte zu verbrennen, um einen Strom von erhitztem Gas zu liefern, und den Strom von erhitztem Gas durch den mindestens einen Gasauslass (29) des Vergasers (11) zu liefern; und
dadurch dass die Brennkammer (51) in einem ersten Betriebsmodus durch Regulieren der Luftzufuhr zu der Sekundärkammer (53) gesteuert wird, die Sekundärkammer (53) auf einer Temperatur von mindestens 850 °C zu halten und den Strom von Synthesegas zu verbrennen, der von der Primärkammer (15) in dem ersten Betriebsmodus des Vergasers (11) zugeführt wird, um einen Strom von erhitztem Gas durch den mindestens einen Gasauslass (57) der Brennkammer (51) zu erzeugen, und in einem zweiten Betriebsmodus den Strom von erhitztem Gas, der von der Primärkammer (15) in dem zweiten Betriebsmodus des Vergasers (11) geliefert wird, durch den mindestens einen Gasauslass (57) der Brennkammer (51) zu liefern.

2. System nach Anspruch 1, worin der Brenner (17) des Vergasers (11) eine Luftzufuhr (33) und ein Steuerventil (35) umfasst, das die Luftzufuhr zum Brenner (17) regelt und so die Zündrate der Abfallprodukte steuert.

3. System nach Anspruch 1 oder 2, worin die Luftzufuhreinheit (19) des Vergasers (11) mindestens ein Gebläse (41) umfasst, das gesteuert wird, die Zufuhr von Luft in die Primärkammer (15) zu regeln, wahlweise worin die Luftzufuhreinheit (19) des Vergasers (11) ein Rückschlagventil (47) umfasst, das den mindestens einen Lufteinlass (27) der Primärkammer (15) mit dem mindestens einen Gebläse (41) der Luftzufuhreinheit (19) des Vergasers (11) fluidmäßig verbindet, wobei das Rückschlagventil (47) einen Rückfluss stromaufwärts des Rückschlagventils (47) verhindert.

4. System nach einem der Ansprüche 1 bis 3, wobei die Luftzufuhreinheit (19) des Vergasers (11) gesteuert wird, zwischen ersten Perioden, in denen der Primärkammer (15) Luft mit einer ersten Rate oder darüber zugeführt wird, und zweiten Perioden, in denen der Primärkammer (15) Luft mit einer zweiten Rate oder darunter zugeführt wird, zyklisch wechselt, wobei der Primärkammer (15) in den zweiten Perioden wahlweise im Wesentlichen keine Luft zugeführt wird.

5. System nach einem der Ansprüche 1 bis 4, worin das System ausgestaltet ist, die Abfallprodukte in Chargen oder kontinuierlich zu erhitzen.

6. System nach einem der Ansprüche 1 bis 5, worin die Luftzufuhreinheit (59) der Brennkammer (51) einen Kanal (63) umfasst, der sich zumindest teilweise durch die Primärkammer (15) oder an diese angrenzend erstreckt, so dass die Luft, die der Brennkammer (51) durch den mindestens einen Lufteinlass derselben zugeführt wird, vorgewärmt wird.

7. System nach Anspruch 6, wobei die Luft, die der Brennkammer (51) durch den mindestens einen Lufteinlass zugeführt wird, auf eine Temperatur von mindestens 350 °C vorgeheizt wird.

8. System nach einem der Ansprüche 1 bis 7, worin die Luftzufuhreinheit (59) der Brennkammer (51) mindestens ein Gebläse (61) umfasst, das gesteuert wird, die Zufuhr von Luft durch den mindestens einen Lufteinlass der Brennkammer (51) zu regeln.

9. System nach einem der Ansprüche 1 bis 8, wobei die Brennkammer (51) gesteuert wird, die Sekundärkammer (53) in dem ersten Betriebsmodus des Vergasers (11) auf einer Temperatur von mindestens 900 °C oder im Bereich von etwa 850 °C bis etwa 1000 °C zu halten.

10. System nach einem der Ansprüche 1 bis 9, worin die Sekundärkammer (53) ausgestaltet ist, dass das Synthesegas darin eine Verweilzeit von mehr als 2 s, wahlweise von mindestens 3 s, aufweist.

11. System nach einem der Ansprüche 1 bis 10, wobei der Vergaser (11) in dem zweiten Betriebsmodus des Vergasers (11) gesteuert wird, die Sekundärkammer (53) auf einer Temperatur von mindestens 1000 °C, wahlweise mindestens 1100 °C, zu halten, um der Brennkammer (51) einen Strom erhitzter Luft mit einer Temperatur von mindestens 1000 °C, wahlweise mindestens 1100 °C, zu liefern.

12. Verwendung des Systems nach einem der Ansprüche 1 bis 11 mit Abfallprodukten, ausgewählt unter einem aus festem Abfall gewonnenen Brennstoff (RDF), festem Siedlungsabfall (MSW), medizinischen Abfällen, biomedizinischen Abfällen, landwirtschaftlichen Abfällen, pflanzlichen Abfallen, tierischen Abfällen, Biomasse, Textilabfällen, Lebensmittelabfällen, Zellstoffabfällen, Reifenabfällen, Kunststoffabfällen, Produktionsabfällen oder einer Kombination davon.

13. Verwendung nach Anspruch 12, wobei das Abfallprodukt mit einem Material mit höherem Heizwert kombiniert wird.

## Revendications

1. Système de génération de gaz chauffé pour générer du gaz chauffé à partir de produit résiduaire, le système comprenant :
un gazéificateur (11) qui comprend une chambre primaire (15) destinée à recevoir du produit résiduaire et comprenant au moins une entrée d'air (27) et au moins une sortie de gaz (29), un brûleur (17) destiné à enflammer du produit résiduaire maintenu dans la chambre primaire (15), et une unité d'amenée d'air (19) destinée à amener de l'air dans la chambre primaire (15) à travers ladite au moins une entrée d'air (27) de la chambre primaire (15) ; et
un dispositif de combustion (51) qui comprend une chambre secondaire (53) comprenant au moins une entrée de gaz (55) qui est reliée fluidiquement à ladite au moins une sortie de gaz (29) de la chambre primaire (15), au moins une entrée d'air et au moins une sortie de gaz (57), au moins un brûleur (67) pour préchauffer la chambre secondaire (53), et une unité d'amenée d'air (59) destinée à amener de l'air à travers ladite au moins une entrée d'air du dispositif de combustion (51) ;
**caractérisé par le fait que** :
le gazéificateur (11) est commandé, dans un premier mode de fonctionnement, par régulation de l'amenée d'air à la chambre primaire (15) de façon à chauffer le produit résiduaire pour extraire du syngaz ou du gaz de synthèse à partir du produit résiduaire et amener un courant de syngaz à travers ladite au moins une sortie de gaz (29) du gazéificateur (11), et ensuite, dans un second mode de fonctionnement, après l'extraction de syngaz à partir du produit résiduaire, par régulation de l'amenée d'air à la chambre primaire (15) pour qu'elle soit supérieure à l'amenée d'air à la chambre primaire (15) dans le premier mode de fonctionnement du gazéificateur (11) de façon à brûler le produit résiduaire pour fournir un courant de gaz chauffé et amener le courant de gaz chauffé à travers ladite au moins une sortie de gaz (29) du gazéificateur (11) ; et
le dispositif de combustion (51) est commandé, dans un premier mode de fonctionnement, par régulation de l'amenée d'air à la chambre secondaire (53) de manière à maintenir la chambre secondaire (53) à une température d'au moins 850 °C et à brûler le courant syngaz qui est amené de la chambre primaire (15) dans le premier mode de fonctionnement du gazéificateur (11) pour générer un courant de gaz chauffé à travers ladite au moins une sortie de gaz (57) du dispositif de combustion (51), et, dans un second mode de fonctionnement, amener le courant de gaz chauffé qui est amené de la chambre primaire (15) dans le second mode de fonctionnement du gazéificateur (11) à travers ladite au moins une sortie de gaz (57) du dispositif de combustion (51).

2. Système selon la revendication 1, dans lequel le brûleur (17) du gazéificateur (11) comprend une alimentation en air (33) et une vanne de commande (35) qui régule une alimentation en air au brûleur (17) et commande ainsi une vitesse d'inflammation du produit résiduaire.

3. Système selon l'une des revendications 1 ou 2, dans lequel l'unité d'amenée d'air (19) du gazéificateur (11) comprend au moins un ventilateur (41) qui est commandé pour réguler une amenée d'air dans la chambre primaire (15), facultativement l'unité d'amenée d'air (19) du gazéificateur (11) comprend un clapet de non-retour (47) qui relie fluidiquement ladite au moins une entrée d'air (27) de la chambre primaire (15) audit au moins un ventilateur (41) de l'unité d'amenée d'air (19) du gazéificateur (11), ce par quoi le clapet de non-retour (47) empêche un reflux en amont du clapet de non-retour (47) .

4. Système selon l'une quelconque des revendications 1 à 3, dans lequel l'unité d'amenée d'air (19) du gazéificateur (11) est commandée pour cycler entre des premières périodes dans lesquelles de l'air est amené à la chambre primaire (15) à ou au-dessus d'un premier débit et des secondes périodes dans lesquelles de l'air est amené à la chambre primaire (15) à ou au-dessous d'un second débit, facultativement sensiblement aucun air n'est amené à la chambre primaire (15) dans les secondes périodes.

5. Système selon l'une quelconque des revendications 1 à 4, dans lequel le système est configuré pour chauffer le produit résiduaire par lots ou en continu.

6. Système selon l'une quelconque des revendications 1 à 5, dans lequel l'unité d'amenée d'air (59) du dispositif de combustion (51) comprend un conduit (63) qui s'étend au moins en partie à travers ou de manière adjacente à la chambre primaire (15), de telle sorte que l'air qui est amené au dispositif de combustion (51) à travers ladite au moins une entrée d'air de celui-ci est préchauffé.

7. Système selon la revendication 6, dans lequel l'air qui est amené au dispositif de combustion (51) à travers ladite au moins une entrée d'air de celui-ci est préchauffé à une température d'au moins 350 °C.

8. Système selon l'une quelconque des revendications 1 à 7, dans lequel l'unité d'amenée d'air (59) du dispositif de combustion (51) comprend au moins un ventilateur (61) qui est commandé pour réguler une amenée d'air à travers ladite au moins une entrée d'air du dispositif de combustion (51).

9. Système selon l'une quelconque des revendications 1 à 8, dans lequel le dispositif de combustion (51) est commandé pour maintenir la chambre secondaire (53), pendant le premier mode de fonctionnement du gazéificateur (11), à une température d'au moins 900 °C ou dans la plage d'environ 850 °C à environ 1000 °C.

10. Système selon l'une quelconque des revendications 1 à 9, dans lequel la chambre secondaire (53) est configurée de telle sorte que le syngaz a un temps de séjour supérieur à 2 s dans celle-ci, facultativement d'au moins 3 s.

11. Système selon l'une quelconque des revendications 1 à 10, dans lequel le gazéificateur (11) est commandé, dans le second mode de fonctionnement du gazéificateur (11), pour maintenir la chambre secondaire (53) à une température d'au moins 1000 °C, facultativement d'au moins 1100 °C, pour fournir un courant d'air chauffé au dispositif de combustion (51) à une température d'au moins 1000 °C, facultativement d'au moins 1100 °C.

12. Utilisation du système selon l'une quelconque des revendications 1 à 11, avec un produit résiduaire choisi parmi un combustible dérivé de déchets solides (RDF), les déchets solides municipaux (DSM), les déchets médicaux, les déchets biomédicaux, les déchets agricoles, les déchets végétaux, les déchets animaux, la biomasse, les déchets textiles, les déchets alimentaires, les déchets de pâte à papier, les déchets de pneu, les déchets plastiques, les déchets de fabrication, ou toute combinaison de ceux-ci.

13. Utilisation selon la revendication 12, dans laquelle le produit résiduaire est combiné avec un matériau ayant un pouvoir calorifique supérieur.
